# EUROPEAN PATENT APPLICATION

(11) **EP 4 636 889 A1**
(43) Date of publication of application: **22.10.2025**
(21) Application number: 22968846.0
(22) Date of filing: 20.12.2022
(51) Int. Cl.: H01M 10/0567, H01M 10/0569

(54) **ELECTROLYTE, ELECTROCHEMICAL DEVICE AND ELECTRONIC DEVICE**

(71) Applicant: Dongguan Amperex Technology Limited, Dongguan City, Guangdong Province, PRC 523000 (CN)
(72) Inventor: CAI, Xin, Dongguan City, Guangdong 523000 (CN); CUI, Hui, Dongguan City, Guangdong 523000 (CN); TANG, Chao, Dongguan City, Guangdong 523000 (CN)
(74) Representative: Icosa
(86) International application number: PCT/CN2022/140331
(87) International publication number: WO 2024/130543

(57) **Abstract**

This application relates to an electrolyte, an electrochemical device, and an electronic device. The electrolyte includes a carboxylate ester compound and a norbornene anhydride compound. Based on a mass of the electrolyte, a mass percentage of the carboxylate ester compound is A% satisfying 5 ≤ A ≤ 45. When the electrolyte in this application is applied to the electrochemical device, the electrochemical device can have a good fast charging capability, good cycling performance, and good high-temperature storage performance.

## Description

### TECHNICAL FIELD

This application relates to the field of battery technologies, and in particular, to an electrolyte, an electrochemical device, and an electronic device.

### BACKGROUND

A lithium-ion battery has advantages such as high energy density, high operating voltage, and light weight, and therefore, is widely used as a portable power supply in an electronic product such as a mobile phone, a notebook computer, or a camera. With the rapid development of economy and society, people not only hope that the lithium-ion battery can have a good fast charging capability, but also expect the lithium-ion battery to have good stability and safety under harsh operating conditions, such as in a high-temperature environment.

### SUMMARY

This application provides an electrolyte, an electrochemical device, and an electronic device. When the electrolyte is applied to the electrochemical device, the electrochemical device can have a good fast charging capability, good cycling performance, and good high-temperature storage performance.

According to a first aspect, this application proposes an electrolyte. The electrolyte includes a carboxylate ester compound and a compound of Formula (I), where 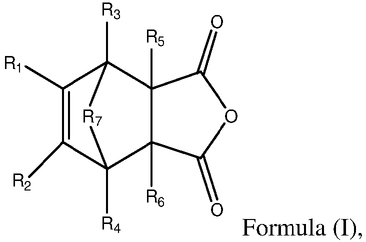 where
in Formula (I), R₁ to R₆ are independently selected from hydrogen atom, halogen atom, substituted or unsubstituted C₁ to C₁₀ chain or cyclic alkyl, substituted or unsubstituted C₂ to C₁₀ chain or cyclic alkenyl, a substituted or unsubstituted C₂ to C₁₀ chain or cyclic alkynyl, substituted or unsubstituted C₁ to C₁₀ alkoxy, substituted or unsubstituted C₂ to C₁₀ alkoxyalkyl, substituted or unsubstituted C₆ to C₁₀ aryl, substituted or unsubstituted C₆ to C₁₀ aryloxy, substituted or unsubstituted C₁ to C₁₀ aldehyde group, substituted or unsubstituted C₂ to C₁₀ acyl, substituted or unsubstituted C₂ to C₁₀ carboxylate group, substituted or unsubstituted C₂ to C₁₀ carbonate group, cyanide, amino, or hydroxyl, a substituted or unsubstituted C₁ to C₁₀ nitrogen-containing group, a substituted or unsubstituted C₁ to C₁₀ sulfur-containing group, a substituted or unsubstituted C₁ to C₁₀ boron-containing group, a substituted or unsubstituted C₁ to C₁₀ silicon-containing group, or a substituted or unsubstituted C₁ to C₁₀ phosphorus-containing group; and R₇ is selected from substituted or unsubstituted C₁ to C₁₀ alkylene, substituted or unsubstituted C₃ to C₁₀ cycloalkylene, substituted or unsubstituted C₁ to C₁₀ alkenylene, a substituted or unsubstituted C₁ to C₁₀ oxygen-containing group, or a substituted or unsubstituted C₁ to C₁₀ nitrogen-containing group, where when substituted, a substituent includes at least one of a halogen atom or cyanide; and based on a mass of the electrolyte, a mass percentage of the carboxylate ester compound is A% satisfying: 5 ≤ A ≤ 45.

The electrolyte in this application includes the carboxylate ester compound, and the carboxylate ester compound can reduce a dissociation degree of lithium salts due to low polarity, so that a solvation structure contains a higher amount of anion, and more anions participate in a film-forming reaction, thereby reducing interface impedance between a negative active material and the electrolyte. In addition, low solvation energy of the carboxylate ester compound can further reduce the interfacial impedance, thereby improving a fast charging capability of an electrochemical device. Besides, the electrolyte also includes the compound, of Formula (I), in which an unsaturated double bond in a molecule can be polymerized on surfaces of positive and negative electrodes to form a film. An anhydride group in the molecule can be synchronously adhered to a surface of a positive active material, and neutralize alkalinity of the surface of the positive active material, to reduce decomposition by the alkalinity of the positive active material for the carboxylate ester compound. In addition, the anhydride group can capture water and a hydrofluoric acid HF in the electrolyte, to reduce impact of the water and the hydrofluoric acid HF on a cathode electrolyte interface (CEI) film, improve protection for the positive active material, ensure cycling stability of the positive active material; and reduce contact between the carboxylate ester compound and the positive active material, to reduce a decomposition reaction of the carboxylate ester compound, thereby improving cycling stability and high-temperature storage performance of the electrochemical device. Moreover, due to a steric hindrance of a bridge ring structure in the compound of Formula (I), relatively small film-forming impedance can be obtained, and a case in which by-products during cycling are densely accumulated on a surface of an active material can be inhibited, so that transport of lithium ions between the active material and the carboxylate ester compound can be promoted. Therefore, the compound of Formula (I) and the carboxylate ester compound have a synergistic effect, to further improve the fast charging capability and the cycling stability of the electrochemical device.

In some embodiments, the carboxylate ester compound includes carboxylate ester with a total quantity of 2 to 10 C atoms in a molecule. Optionally, in some embodiments, the carboxylate ester compound includes carboxylate ester with a total quantity of 3 to 6 C atoms in a molecule.

In some embodiments, the carboxylate ester compound includes at least one of ethyl formate, propyl formate, butyl formate, isobutyl formate, methyl acetate, ethyl acetate, propyl acetate, methyl propionate, ethyl propionate, or propyl propionate.

In some embodiments, 10 ≤A ≤ 45.

In some embodiments, the compound of Formula (I) includes at least one of a compound of Formula (I-1) to a compound of Formula (I-15):

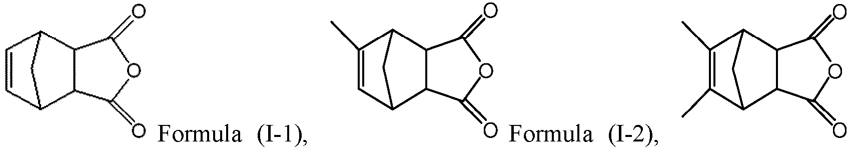

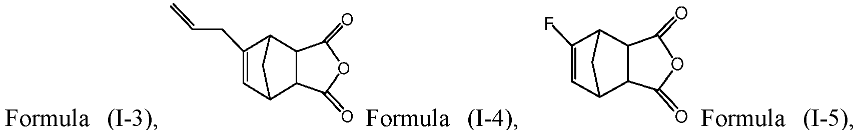

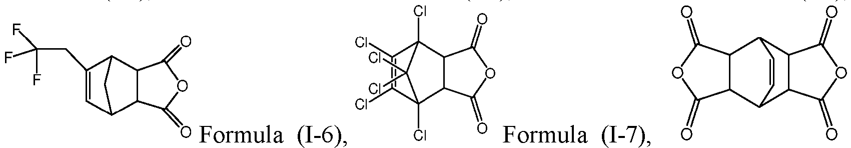

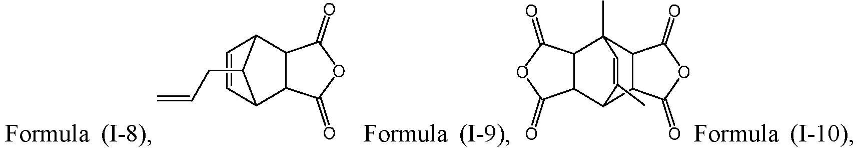

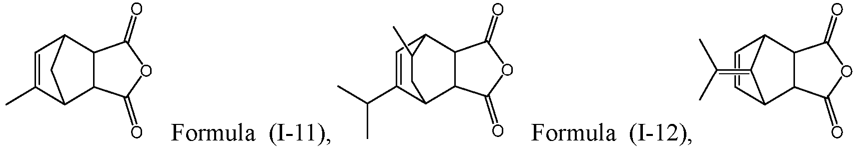

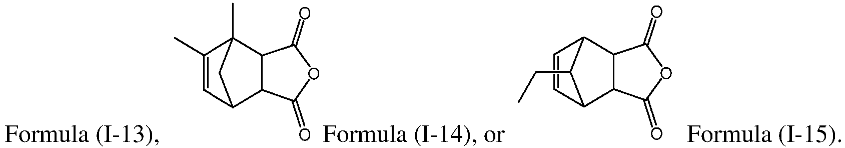

In some embodiments, based on the mass of the electrolyte, a mass percentage of the compound of Formula (I) is B% satisfying 0.01 ≤ B ≤ 5.00.

In some embodiments, 0.01 ≤ B / A ≤ 0.4. Optionally, in some embodiments, 0.01 ≤ B / A ≤ 0.11.

In some embodiments, the electrolyte further includes ethylene carbonate, and based on the mass of the electrolyte, a mass percentage of the ethylene carbonate is C% satisfying 0.25 ≤ C / A ≤ 11.5. Optionally, in some embodiments, 0.25 ≤ C / A ≤ 5.2.

In some embodiments, the electrolyte further includes a compound containing sulfur-oxygen double bond.

In some embodiments, based on the mass of the electrolyte, a mass percentage of the compound containing sulfur-oxygen double bond is D% satisfying 0.01 ≤ D ≤ 6.

In some embodiments, the compound containing sulfur-oxygen double bond includes at least one of 1,3-propane sultone, ethylenesulfate, propene sultone, 3-fluoro-1,3-propane sultone, 1,2-propane sultone, 1,4-butane sultone, 1,2-butane sultone, 1,3-butane sultone, 2,4-butane sultone, or 1,3-pentane sultone.

In some embodiments, the electrolyte further includes a polynitrile compound.

In some embodiments, based on the mass of the electrolyte, a mass percentage of the polynitrile compound is E% satisfying 0.1 ≤ E ≤ 8.

In some embodiments, the polynitrile compound includes at least one of succinonitrile, glutaronitrile, adiponitrile, ethylene glycol bis(propionitrile) ether, or 1,3,6-hexanetricarbonitrile.

According to a second aspect, this application provides an electrochemical device including the electrolyte in any embodiment of the first aspect of this application.

According to a third aspect, this application provides an electronic device including the electrochemical device in the second aspect of this application.

### DETAILED DESCRIPTION OF EMBODIMENTS

Embodiments of this application are depicted in detail below. Embodiments of this application should not be explained as a limitation of this application.

In addition, quantities, ratios, and other values are sometimes presented herein in a range format. It should be understood that such range formats are used for convenience and brevity, and it should be flexibly understood that such range formats not only include values explicitly designated as limitations of a range, but also include all individual values or subranges in the range as if each value and subrange were explicitly designated.

In specific implementations and claims, a list of items listed by the terms "one or more of", "one or more pieces of", "one or more types of", or other similar terms may imply any combination of the items listed. For example, if items A and B are listed, the phrase "at least one of A and B" implies A only; B only; or A and B. In another example, if items A, B, and C are listed, then the phrase "at least one of A, B, and C" means A only; B only; C only; A and B (excluding C); A and C (excluding B); B and C (excluding A); or all of A, B, and C. Item A may include a single component or a plurality of components. Item B may include a single component or a plurality of components. Item C may include a single component or a plurality of components.

The term "halogen" means fluorine, chlorine, bromine, and the like.

The term "aldehyde" refers to a group containing -C(=O)-H.

The term "acyl" refers to a group of atoms remaining after removal of one or more pieces of hydroxyl from carboxylic acid, and a structural formula can be expressed by -C(=O)-R. For example, the acyl may be C₂ to C₁₀ acyl. In some embodiments, the acyl may include acetyl, propionyl, butyryl, valeryl, and the like.

The term "carboxylate" means a group containing -C(=O)-O-.

The term "carbonate" means a group containing -O-C(=O)-O-.

The term "nitrogen-containing group" refers to a group containing a nitrogen atom in the group, including amino, amide, and the like.

The term "sulfur-containing group" refers to a group that contains a sulfur atom in the group, including alkylthiol, sulfonate, sulfonic group, sulfate, sulfone, and the like.

The term "boron-containing group" refers to a group containing a boron atom in the group, including borate and the like.

The term "silicone-containing group" refers to a group containing a silicon atom in the group, including silyl, silicate, and the like.

The term "phosphorus-containing group" refers to a group containing a phosphorus atom in the group, including phosphate ester group, phosphite ester group, and the like.

The term "oxygen-containing group" refers to a group that contains an oxygen atom in the group, including a chain anhydride group, a cyclic anhydride group, carboxylate ester, carbonate ester, alkoxy, alkoxyalkyl, and the like. The term "chain anhydride group" refers to a group formed by dehydration of organic carboxylate ester. For example, the chain anhydride group may be C₂ to C₁₀ chain anhydride groups. In some embodiments, the chain anhydride group may include a dicarboxylic anhydride group, a diacetic anhydride group, a dipropionic anhydride group, a dibutyric anhydride group, a divaleric anhydride group, and the like. The term "cyclic anhydride group" refers to a group in which anhydride groups form a cyclic shape. For example, the cyclic anhydride group may be C₄ to C₁₀ cyclic anhydride groups. In some embodiments, the cyclic anhydride group may include a succinic anhydride group, a glutaric anhydride group, an adipic anhydride group, and the like.

### Electrolyte

According to a first aspect, this application proposes an electrolyte. The electrolyte includes a carboxylate ester compound and a compound of Formula (I), where 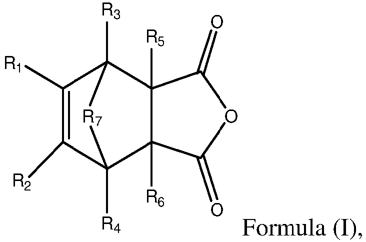 where
in Formula (I), R₁ to R₆ are independently selected from hydrogen, halogen, substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, substituted or unsubstituted C₁ to C₁₀ alkoxy, substituted or unsubstituted C₂ to C₁₀ alkoxyalkyl, substituted or unsubstituted C₆ to C₁₀ aryl, substituted or unsubstituted C₆ to C₁₀ aryloxy, substituted or unsubstituted C₁ to C₁₀ aldehyde group, substituted or unsubstituted C₂ to C₁₀ acyl, substituted or unsubstituted C₂ to C₁₀ carboxylate group, substituted or unsubstituted C₂ to C₁₀ carbonate group, cyanide, amino, or hydroxyl, a substituted or unsubstituted C₁ to C₁₀ nitrogen-containing group, a substituted or unsubstituted C₁ to C₁₀ sulfur-containing group, a substituted or unsubstituted C₁ to C₁₀ boron-containing group, a substituted or unsubstituted C₁ to C₁₀ silicon-containing group, or a substituted or unsubstituted C₁ to C₁₀ phosphorus-containing group; and R₇ is selected from substituted or unsubstituted C₁ to C₁₀ alkylene, substituted or unsubstituted C₃ to C₁₀ cycloalkylene, substituted or unsubstituted C₁ to C₁₀ alkenylene, a substituted or unsubstituted C₁ to C₁₀ oxygen-containing group, or a substituted or unsubstituted C₁ to C₁₀ nitrogen-containing group, where when substitution is performed, a substituent includes at least one of a halogen atom or cyanide; and based on a mass of the electrolyte, a mass percentage of the carboxylate ester compound is A% satisfying: 5 ≤ A ≤ 45.

The applicant of this application finds that when the carboxylate ester compound and the compound of Formula (I) are used together, the two compounds can have a synergistic effect, so that an electrochemical device has a good fast charging capability, good cycling stability, and good high-temperature storage performance. The electrolyte includes the carboxylate ester compound, and the carboxylate ester compound can reduce a dissociation degree of lithium salts due to low polarity, so that a solvation structure contains a higher amount of anion, and more anions participate in a film-forming reaction, thereby reducing interface impedance between a negative active material and the electrolyte. In addition, low solvation energy of the carboxylate ester compound can further reduce the interfacial impedance, thereby improving the fast charging capability of the electrochemical device. However, in the electrochemical device, in a long-term cycling or high-temperature environment, the carboxylate ester compound has relatively high activity and is prone to be captured by a positive active material, resulting in an oxidation and decomposition reaction, and alkalinity on a surface of the positive active material is prone to promote decomposition of the carboxylate ester compound. Consequently, the cycling stability and the high-temperature storage performance of the electrochemical device are affected. Besides, the electrolyte also includes the compound of Formula (I), in which an unsaturated double bond can be polymerized on surfaces of positive and negative electrodes to form a film. An anhydride group in the molecule can be synchronously adhered to the surface of the positive active material, and neutralize the alkalinity of the surface of the positive active material, to reduce decomposition by the alkalinity of the positive active material for the carboxylate ester compound. In addition, the anhydride group can capture water and a hydrofluoric acid HF in the electrolyte, to reduce impact of the water and the hydrofluoric acid HF on a cathode electrolyte interface (CEI) film, improve protection by the CEI film for the positive active material, ensure cycling stability of the positive active material; and reduce contact between the carboxylate ester compound and the positive active material, to reduce the decomposition reaction of the carboxylate ester compound, thereby improving the cycling stability and the high-temperature storage performance of the electrochemical device.

Moreover, due to a steric hindrance of a bridge ring structure in the compound of Formula (I), relatively small film-forming impedance can be obtained, and a case in which by-products during cycling are densely accumulated on a surface of an active material can be inhibited, so that transport of lithium ions between the active material and the carboxylate ester compound can be promoted. Therefore, the compound of Formula (I) and the carboxylate ester compound have a synergistic effect, to further improve the fast charging capability and the cycling stability of the electrochemical device.

In some embodiments, the carboxylate ester compound includes carboxylate ester with a total quantity of 2 to 10 C atoms in a molecule. Optionally, the carboxylate ester compound includes carboxylate ester with a total quantity of 3 to 6 C atoms in a molecule.

For example, the carboxylate ester compound includes at least one of ethyl formate, propyl formate, butyl formate, isobutyl formate, methyl acetate, ethyl acetate, propyl acetate, methyl propionate, ethyl propionate, or propyl propionate. Optionally, the carboxylate ester compound includes at least one of the methyl acetate, the ethyl acetate, the ethyl propionate, or the propyl propionate.

For example, the mass percentage A% of the carboxylate ester compound may be 5%, 10%, 12%, 15%, 18%, 20%, 25%, 28%, 30%, 35%, 40%, 42%, 45%, or in a range formed by any two of the foregoing values. In some embodiments, 10 ≤ A ≤ 45. When the mass percentage A% of the carboxylate ester compound is in the above range, impedance of the electrochemical device can be further reduced, and the fast charging capability of the electrochemical device can be improved.

In some implementations, the compound of Formula (I) includes at least one of a compound of Formula (I-1) to a compound of Formula (I-15): 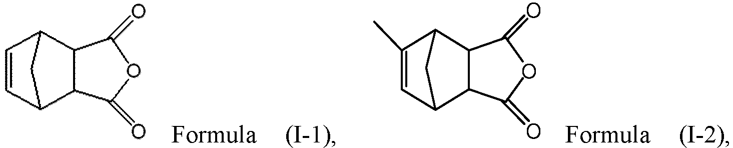 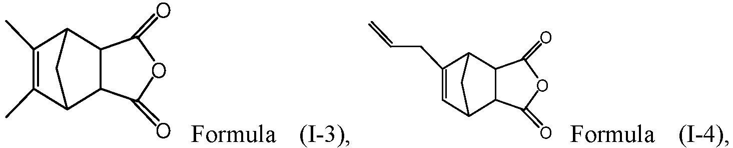 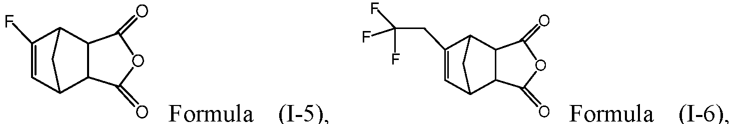 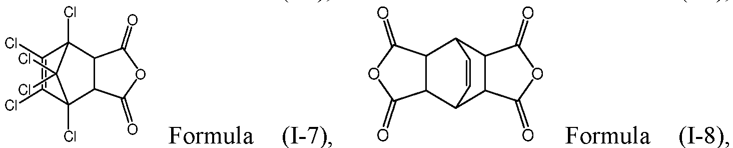 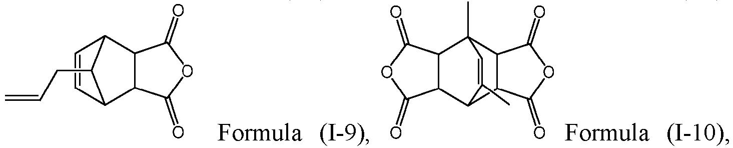 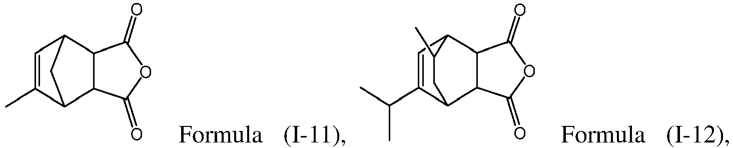 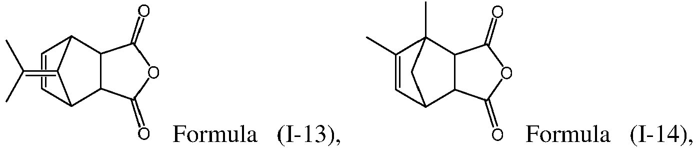 or

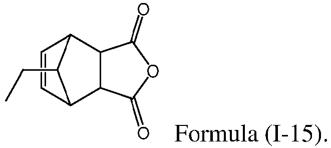

In some embodiments, based on the mass of the electrolyte, a mass percentage of the compound of Formula (I) is B% satisfying 0.01 ≤ B ≤ 5.00.

When the mass percentage of the compound of Formula (I) is in the above range, a film-forming effect of the electrolyte on a surface of the negative active material can be improved, the interfacial impedance between the negative active material and the electrolyte can be reduced, and a case in which by-products are densely accumulated on the surface of the negative active material can be inhibited, so as to improve the fast charging capability and the cycling stability of the electrochemical device. For example, the mass percentage B% of the compound of Formula (I) may be 0.01%, 0.02%, 0.05%, 0.08%, 0.10%, 0.12%, 0.15%, 0.18%, 0.20%, 0.50%, 0.60%, 0.70%, 1.00%, 1.20%, 1.50%, 2.00%, 2.50%, 3.00%, 3.50%, 4.00%, 4.50%, 5.00%, or in a range formed by any two of the foregoing values. Optionally, 0.5 ≤ B ≤ 5.

In some embodiments, the electrolyte satisfies: 0.01 ≤ B / A ≤ 0.4. When the mass percentage of the carboxylate ester compound and the mass percentage of the compound of Formula (I) satisfy the foregoing relationship, the two compounds can have a good synergistic effect, so that the electrochemical device has the good fast charging capability, the good cycling stability, and the good high-temperature storage performance. For example, B / A may be 0.01, 0.02, 0.03, 0.05, 0.06, 0.07, 0.08, 0.09, 0.10, 0.11, 0.2, 0.3, 0.4, or in a range formed by any two of the above values. Optionally, 0.01 ≤ B / A ≤ 0.11.

In some embodiments, the electrolyte further includes ethylene carbonate, and based on the mass of the electrolyte, a mass percentage of the ethylene carbonate is C% satisfying 0.25 ≤ C / A ≤ 11.5. Due to addition of the carboxylate ester compound in the electrolyte, as cycling is performed, consumption of the carboxylate ester compound in the negative electrode is intensified. In this case, the ethylene carbonate can repair the SEI film during the cycling, and reduce the consumption of the carboxylate ester compound during the cycling. In addition, the ethylene carbonate has a relatively high dielectric constant, and can dissolve a lithium salt to a greater extent, so that the lithium salt dissociates lithium ions more easily, and ionic conductivity of the electrolyte is improved, thereby improving the fast charging capability and the cycling stability of the electrochemical device. However, the ethylene carbonate, like the carboxylate ester compound, is prone to be oxidized by the positive active material. In this case, presence of the compound of Formula (I) can also reduce an oxidation and decomposition action of the positive active material on the ethylene carbonate and ensure the high-temperature storage performance of the electrochemical device. In addition, although the ethylene carbonate has a high freezing point, low-temperature performance of the electrochemical device can be ensured by cooperating the ethylene carbonate with the carboxylate ester compound and controlling 0.25 ≤ C / A ≤11.5. For example, C / A may be 0.25, 0.5, 1, 1.5, 2, 2.5, 3, 3.5, 4, 4.5, 5, 7, 9, 10, 11.5, or in a range formed by any two of the above values. Optionally, 0.25 ≤ C / A ≤ 5.2.

In some embodiments, the electrolyte further includes a linear carbonate compound and/or another cyclic carbonate compound. The linear carbonate compound has relatively low viscosity, which is favorable for improving the ionic conductivity; and has relatively high electrochemical stability and a relatively high electrochemical window. For example, the linear carbonate compound includes at least one of dimethyl carbonate, diethyl carbonate, or ethyl methyl carbonate. For example, the another cyclic carbonate compound includes at least one of propylene carbonate or butylene carbonate.

In some embodiments, the electrolyte further includes a compound containing sulfur-oxygen double bond.

In some embodiments, based on the mass of the electrolyte, a mass percentage of the compound containing sulfur-oxygen double bond is D%, where 0.01 ≤ D ≤ 6. For example, the mass percentage of the compound containing sulfur-oxygen double bond may be 0.01%, 0.05%, 0.1%, 0.2%, 0.5%, 0.8%, 1%, 1.2%, 1.5%, 1.8%, 2%, 2.5%, 3%, 3.5%, 4%, 4.5%, 5%, 5.5%, 6%, or in a range formed by any two of the foregoing values.

The compound containing sulfur-oxygen double bond can form a stable CEI film on the surface of the positive active material and inhibit the decomposition of the carboxylate ester compound on the surface of the positive active material, thereby effectively improving the cycling performance and the high-temperature storage performance of the electrochemical device. Moreover, when the mass percentage of the compound containing sulfur-oxygen double bond satisfies the above range, impedance of the CEI film can be ensured to be relatively small, and kinetic performance of the electrochemical device can be ensured.

For example, the compound containing sulfur-oxygen double bond includes at least one of 1,3-propane sultone, ethylenesulfate, propene sultone, 3-fluoro-1,3-propane sultone, 1,2-propane sultone, 1,4-butane sultone, 1,2-butane sultone, 1,3-butane sultone, 2,4-butane sultone, or 1,3-pentane sulton.

In some embodiments, the electrolyte may further include a polynitrile compound.

In some embodiments, based on the mass of the electrolyte, a mass percentage of the polynitrile compound is E%, where 0.1 ≤ E ≤ 8. For example, the mass percentage of the polynitrile compound may be 0.1%, 0.2%, 0.5%, 0.8%, 1%, 1.2%, 1.5%, 1.8%, 2%, 2.5%, 3%, 3.5%, 4%, 4.5%, 5%, 5.5%, 6%, 7%, 8%, or in a range formed by any two of the foregoing values.

The polynitrile compound can be complex with transition metal on the surface of the positive active material, can effectively inhibit dissolution of the transition metal on the surface of the positive active material, reduce the oxidation on the carboxylate ester compound, and improve the high-temperature storage performance of the electrochemical device. Although the polynitrile compound may have a deleterious effect on the negative active material, the compound of Formula (I) in this application protects the negative active material and can alleviate damage of the polynitrile compound to the negative active material. In addition, in this application, the high-temperature storage performance and the cycling performance of the electrochemical device can be improved by regulating the mass percentage of the polynitrile compound to be in the above range.

For example, the polynitrile compound includes at least one of succinonitrile, glutaronitrile, adiponitrile, ethylene glycol bis(propionitrile) ether, or 1,3,6-hexanetricarbonitrile.

In some embodiments, the electrolyte further includes an electrolyte salt. The electrolyte salt is an electrolyte salt known in the art for use in the electrochemical apparatus. Suitable electrolyte salts can be selected for different electrochemical devices. For example, for a lithium-ion battery, a lithium salt is usually used as the electrolyte salt.

In some embodiments, the lithium salt includes at least one of an organic lithium salt and an inorganic lithium salt.

In some embodiments, the lithium salt may include lithium hexafluorophosphate LiPF₆.

The non-aqueous organic solvent in the electrolyte may be a single non-aqueous organic solvent or a mixture of a plurality of non-aqueous organic solvents. When the mixture of solvents is used, a mixing ratio can be controlled based on desired performance of the electrochemical device.

### Electrochemical device

According to a second aspect, this application proposes an electrochemical device. The electrochemical device includes a negative electrode plate, a positive electrode plate, a separator, and an electrolyte.

In some embodiments, the electrochemical device in this application includes, but is not limited to, a primary battery or a secondary battery.

In some embodiments, the electrochemical device is a lithium secondary battery.

In some embodiments, the lithium secondary battery includes, but is not limited to, a lithium metal secondary battery, a lithium-ion secondary battery, a lithium polymer secondary battery, or a lithium-ion polymer secondary battery.

### [Positive electrode plate]

A positive electrode plate is a positive electrode plate that is known in the art and that can be used in an electrochemical device. In some embodiments, the positive electrode plate includes a positive current collector and a positive active material layer. The positive active material layer is disposed on a surface of the positive current collector. The positive active material layer includes a positive active material.

In some embodiments, a structure of the positive electrode plate is a structure of a positive electrode plate that is known in the art and can be used in an electrochemical device.

In some embodiments, the positive current collector is metal, for example, but not limited to, aluminum foil.

The positive active material may be selected from various substances that are known in the art, can reversibly intercalate or deintercalate active ions, and can be used as a positive active material in an electrochemical device. For a lithium-ion battery, a positive active material usually includes a lithium ion.

In some embodiments, the positive active material includes a positive electrode material that can absorb and release lithium, including, but not limited to, lithium cobalt oxide, lithium nickel manganese cobalt oxide, lithium nickel cobalt aluminum oxide, lithium manganate, lithium manganese iron phosphate, lithium iron phosphate, and lithium-rich manganese-based materials.

In some embodiments, the positive active material layer further includes a positive electrode binder and a positive electrode conductive agent. The positive electrode binder is used to improve performance of bonding between positive active material particles and between the positive active material particle and the current collector. In some embodiments, the positive electrode binder includes at least one of poly(vinyl alcohol), carboxymethyl cellulose, hydroxypropyl cellulose, diacetyl cellulose, poly(vinyl chloride), carboxylated poly(vinyl chloride), polyvinyl pyrrolidone, polyurethane, poly(tetrafluoroethylene), polyvinylidene fluoride, vinylidene fluoride-co-hexafluoropropylene, styrene-butadiene rubber, acrylate styrene-butadiene rubber, epoxy resin, or nylon. The positive electrode conductive agent is used to provide conductivity for an electrode, and may include any conductive material as long as the conductive material does not cause a chemical change. In some embodiments, the positive electrode conductive agent includes at least one of carbon black, acetylene black, Ketjen black, carbon fiber, carbon nanotube, graphene, metal powder, metal fiber, or a polyphenylene derivative. In some embodiments, metal in the metal powder and the metal fiber includes at least one of copper, nickel, aluminum, or silver.

In some embodiments, a method for preparing the positive electrode plate is a method for preparing a positive electrode plate that is known in the art and that can be used in an electrochemical device. In some embodiments, in preparation of a positive electrode slurry, the positive active material, the positive electrode binder, and the positive electrode conductive agent are usually added, and then dissolved or dispersed in a solvent to prepare the positive electrode slurry. The solvent is volatilized and removed in a drying process. The solvent is a solvent that is known in the art and that can be used in a positive active material layer, and the solvent is, for example, but not limited to, N-methylpyrrolidone (NMP).

### [Negative electrode plate]

A negative electrode plate is a negative electrode plate that is known in the art and that can be used in an electrochemical device. In some embodiments, the negative electrode plate includes a negative current collector and a negative active material layer. The negative active material layer is disposed on a surface of the negative current collector. The negative active material layer includes a negative active material.

In some embodiments, a structure of the negative electrode plate is a structure of a negative electrode plate that is known in the art and that can be used in an electrochemical device.

In some embodiments, the negative electrode current collector is a metal, such as, but not limited to, copper foil, nickel foil, stainless steel foil, titanium foil, nickel foam, copper foam, a polymer substrate coated with a conductive metal, or a combination thereof.

The negative active material may be selected from various substances that are conventionally known in the art, that can reversibly intercalate or deintercalate active ions, and that can be used as a negative active material in an electrochemical device.

In some embodiments, the negative active material includes at least one of lithium metal, a lithium metal alloy, a carbon material, or a silicon-based material. In some embodiments, the carbon material may be selected from various carbon materials that can be used as a negative active material in an electrochemical device and that are known in the art. In some embodiments, the carbon material includes at least one of natural graphite, artificial graphite, soft carbon, hard carbon, pyrolytic carbon, a mesocarbon microbead, or high temperature wrought carbon. In some embodiments, the silicon-based material includes at least one of Si, SiOx (0<x<2), a Si/C composite, or a Si-Q alloy.

In some embodiments, the negative active material layer further includes a negative electrode binder. In some embodiments, the negative electrode binder includes at least one of a poly(vinylidene fluoride-co-hexafluoropropylene) (PVDF-co-HFP), polyvinylidene fluoride, polyacrylonitrile, acrylate polymer, poly(vinyl alcohol), carboxymethyl cellulose, hydroxypropyl cellulose, poly(vinyl chloride), carboxylated poly(vinyl chloride), polyvinyl pyrrolidone, polyurethane, poly(tetrafluoroethylene), styrene-butadiene rubber, acrylate styrene-butadiene rubber, epoxy resin, or nylon.

In some embodiments, the negative active material layer further contains a negative electrode conductive agent. In some embodiments, the negative electrode conductive agent is used to provide conductivity for an electrode, and may include any conductive material as long as the conductive material does not cause a chemical change. In some embodiments, the negative electrode conductive agent includes any one of a carbon-based material, a metal-based material, a conductive polymer, or a mixture thereof. In some embodiments, the carbon-based material includes at least one of carbon black, acetylene black, Ketjen black, carbon fiber, carbon nanotube, or graphene. In some embodiments, the metal-based material includes at least one of metal powder or metal fiber of copper, nickel, aluminum, silver, or the like. In some embodiments, the conductive polymer includes a polyphenylene derivative.

In some embodiments, a method for preparing the negative electrode plate is a method that is known in the art and that is for preparing a negative electrode plate that can be used in an electrochemical device. In some embodiments, in preparation of a negative electrode slurry, the negative active material and the negative electrode binder are usually added. The negative electrode conductive agent and a thickener are added as needed, and then dissolved or dispersed in a solvent to prepare the negative electrode slurry. The solvent is volatilized and removed in a drying process. The solvent is a solvent that is known in the art and that can be used in a negative active material layer, and the solvent is, for example, but not limited to, water. The thickener is a thickener that is known in the art and that can be used in a negative active material layer, and the thickener is, for example, but not limited to, sodium carboxymethyl cellulose.

This application constitutes no particular limitations on a mixing ratio of the negative active material, the negative electrode binder, the negative electrode conductive agent, and the thickener in the negative active material layer, and the mixing ratio can be controlled based on desired performance of the electrochemical device.

### [Separator]

A separator is a separator that is known in the art and that can be used in an electrochemical device, and is, for example, but not limited to, a polyolefin microporous film. In some embodiments, the separator includes at least one of polyethylene (PE), an ethylene-propylene copolymer, polypropylene (PP), an ethylene-butene copolymer, an ethylene-hexene copolymer, or an ethylene-methyl methacrylate copolymer.

In some embodiments, the separator is a single-layer separator or a multi-layer separator.

In some embodiments, the separator is coated with a coating. In some embodiments, the coating includes at least one of an organic coating and an inorganic coating, where the organic coating is selected from at least one of polyvinylidene fluoride, a vinylidene fluoride-hexafluoropropylene copolymer, polyacrylonitrile, polyimide, an acrylonitrile-butadiene copolymer, an acrylonitrile-styrene-butadiene copolymer, an acrylate polymer, an acrylic acid-styrene copolymer, poly(dimethylsiloxane), sodium polyacrylate, or sodium carboxymethyl cellulose; and the inorganic coating includes an inorganic particle and a binder, and the inorganic particle includes at least one of SiO₂, Al₂O₃, CaO, TiO₂, ZnO₂, MgO, ZrO₂, or SnO₂.

This application constitutes no particular limitation on a morphology and thickness of the separator. A method for preparing the separator is a method that is known in the art and can be used for preparing a separator in an electrochemical device.

### Electronic device

This application further provides an electronic device including the electrochemical device described above in this application.

The electronic device in this application is any electronic device such as, but not limited to, a laptop computer, a pen-input computer, a mobile computer, an e-book player, a portable telephone, a portable fax, a portable photocopier, a portable printer, a head-mounted stereo headset, a video tape recorder, a liquid crystal display television, a handheld cleaner, a portable CD player, a minidisc, a transceiver, an electronic notebook, a calculator, a memory card, a portable tape recorder, a radio, a back-up power supply, an electric motor, an automobile, a motorcycle, a power-assisted bicycle, a bicycle, a lighting apparatus, a toy, a game console, a clock, an electronic tool, a flashing light, a camera, a large storage battery for household use, or a lithium-ion capacitor.

The technical solutions of this application are further described below by taking a lithium-ion battery as an example and with reference to comparative examples and embodiments.

Reagents, materials, and apparatuses used in the following embodiments and comparative embodiments can be obtained commercially or synthetically unless otherwise stated.

### Embodiment 1

### Preparation of the lithium-ion battery

### (2) Preparing a positive electrode plate

Fully stirring and mixing a positive active material lithium cobalt oxide, a conductive agent acetylene black, and a binder poly(vinylidene fluoride) (PVDF) in a weight ratio of 96:2:2 in an appropriate amount of an N-methylpyrrolidone (NMP) solvent to form an even positive electrode slurry. Coating the positive electrode slurry on one surface of a positive current collector aluminum foil, and drying to obtain a positive electrode plate coated with a positive active material layer on one surface. Repeating the above steps on the other surface of the positive current collector aluminum foil, to obtain a positive electrode plate coated with positive active material layers on both surfaces. Performing cold pressing, cutting, and slitting, to obtain a positive electrode plate.

### (3) Preparation of negative electrode plate

Fully stirring and mixing a negative active material artificial graphite, a binder styrene-butadiene rubber (SBR), and a thickener sodium carboxymethyl cellulose (CMC-Na) in a weight ratio of 97.4:1.2:1.4 in an appropriate amount of a deionized water solvent to form an even negative electrode slurry. Coating the negative electrode slurry on one surface of a negative current collector copper foil, and drying to obtain a negative electrode plate coated with a negative active material layer on one surface. Repeating the above steps on the other surface of the negative current collector copper foil, to obtain a negative electrode plate coated with negative active material layers on both surfaces. Performing cold pressing, cutting, and slitting, to obtain a negative electrode plate.

### (4) Preparation of electrolyte

In an argon atmosphere glove box with a water content <10 ppm, evenly mixing ethylene carbonate (EC), propylene carbonate (PC), and ethyl propionate (EP) as a non-aqueous solvent in an appropriate mass ratio based on mass percentage of the substances in an electrolyte, then dissolving a fully dried lithium salt LiPF₆ in the above non-aqueous solvent, and finally adding a compound of Formula (I) with specific mass to prepare an electrolyte. Mass percentages of the substances in the electrolyte are calculated based on total mass of the electrolyte. A mass percentage of the LiPF₆ is 12.5%, a mass percentage of the ethyl propionate is 5%, a mass percentage of the compound of Formula (I) is 0.5%, a mass percentage of the PC is 25%, and the EC accounts for a remaining mass percentage.

### (5) Preparation of separator

A polyethylene (PE) porous film with a thickness of 5 µm is selected as a separator.

### (6) Preparing a lithium-ion battery

Stacking a positive electrode plate, a separator, and a negative electrode plate in order, so that the separator is located between the positive electrode plate and the negative electrode plate for separation. Then, performing winding to obtain an electrode assembly. Placing the electrode assembly in an outer packaging aluminum-laminated film, and injecting the foregoing prepared electrolyte. Performing processes such as vacuum encapsulation, resting, formation, shaping, and capacity testing, to obtain a soft pack lithium-ion battery.

**Embodiment 2 to Embodiment 24:** Different from Embodiment 1, a type or a mass percentage of at least one of a carboxylate ester compound and a compound of Formula (I) is adjusted in Embodiment 2 to Embodiment 24.

**Comparative embodiment 1 to Comparative embodiment** 3: Different from Embodiment 1, a mass percentage of at least one of a carboxylate ester compound and a compound of Formula (I) and/or a type of an additive are/is adjusted in Comparative embodiment 1 to Comparative embodiment 3.

**Embodiment 25 to Embodiment 35:** Different from Embodiment 10, at least one of a compound containing sulfur-oxygen double bond and a polynitrile compound is further added in an electrolyte in Embodiment 25 to Embodiment 35.

### Lithium-ion battery performance test

### 1. Lithium plating test

Charging a lithium-ion battery to 4.48 V with 7 C at 12°C and then charging the battery to 0.05 C at the constant voltage of 4.48 V, so that the lithium-ion battery reaches a fully charged state. Then, discharging the battery to 3.0 V at a constant current of 1.0 C. Performing ten cycles, and in the tenth fully charged state, performing dismantlement and observing a lithium plating area percentage of a negative electrode plate.

If no lithium plating is found or the lithium plating area percentage < 2%, this is called no lithium plating.

If 2% ≤ the lithium plating area percentage ≤ 10%, this is called slight lithium plating.

If 10% < the lithium plating area percentage ≤ 20%, this is called moderate lithium plating.

If the lithium plating area percentage > 20%, this is called severe lithium plating.

### 2. High-temperature cycling test

Placing a lithium-ion battery in a 45°C constant temperature box, charge the battery to 4.48V at a constant current of 1.5C, charging the battery to 0.05C at the constant voltage of 4.48V, then discharging the battery to 3.0V at a constant current of 1.0C, and recording a discharge capacity in this case as an initial discharge capacity. Performing 800 cycles of cycling charge/discharge test in the above manner, and monitoring a capacity retention rate. Capacity retention rate = Cycling discharge capacity at the 800th cycle / Initial discharge capacity x 100%.

### 3. High temperature storage test

Charging a lithium-ion battery to 4.48V at a room temperature at a constant current of 1.5C, charging the battery to 0.05C at the constant voltage of 4.48V, and record an initial thickness L1. Then, placing the battery in an oven at 85°C and stand for 4h, and then thermally measuring a thickness L2 of the lithium-ion battery. Expansion rate = (L2 / L1 - 1) × 100%.

### 4. Low temperature discharge test

In a 25°C constant temperature box, charging a lithium-ion battery to 4.48V at a constant current of 1.5C, then charging the battery to 0.05C at the constant voltage of 4.48V and stand for 10 minutes, and then discharging the battery to 3.0V at 0.2C and recording a discharge capacity C1. Next, charging the battery to 4.48V at a constant current of 1.5C, and charging the battery to 0.05C at the constant voltage of 4.48V.

Adjusting the constant temperature box to -10°C, leaving the battery for 60 min, then discharging the battery to 3.4V at 0.2C, and recording a discharge capacity C2.

Calculate that Low temperature discharge capacity retention rate = (C2 / C1) x 100%.

### Test result

**Table 1**

| Item | Electrolyte | | | | | | | Battery performance | | |
|---|---|---|---|---|---|---|---|---|---|---|
| | Carboxylate ester compound | | Additive | | B/A | EC Mass percentage C% | C/A | 12°C 7C lithium plating test | Cycling for 800 cycles at 45°C | Fully charged storage at 85°C for 4h |
| | Type | Mass percentage A% | Type | Mass percentage B% | | | | Lithium plating area percentage | Capacity retention rate | Swelling rate |
| Embodiment 1 | Ethyl propionate | 5% | Formula (I-1) | 0.5% | 0.10 | 57% | 11.4 | 9.3% | 80.5% | 14.7% |
| Embodiment 2 | Ethyl propionate | 10% | Formula (I-1) | 0.5% | 0.05 | 52% | 5.2 | 8.4% | 80.3% | 15.7% |
| Embodiment 3 | Ethyl propionate | 15% | Formula (I-1) | 0.5% | 0.03 | 47% | 3.13 | 7.9% | 80.0% | 16.5% |
| Embodiment 4 | Ethyl propionate | 20% | Formula (I-1) | 0.5% | 0.03 | 42% | 2.1 | 6.7% | 79.8% | 17.8% |
| Embodiment 5 | Ethyl propionate | 25% | Formula (I-1) | 0.5% | 0.02 | 37% | 1.48 | 5.3% | 79.4% | 19.0% |
| Embodiment 6 | Ethyl propionate | 30% | Formula (I-1) | 0.5% | 0.02 | 32% | 1.07 | 4.8% | 79.0% | 20.1% |
| Embodiment 7 | Ethyl propionate | 35% | Formula (I-1) | 0.5% | 0.01 | 27% | 0.77 | 3.4% | 78.5% | 20.7% |
| Embodiment 8 | Ethyl propionate | 40% | Formula (I-1) | 0.5% | 0.01 | 22% | 0.55 | 2.6% | 78.2% | 22.0% |
| Embodiment 9 | Ethyl propionate | 45% | Formula (I-1) | 0.5% | 0.01 | 17% | 0.38 | 1.6% | 77.8% | 23.2% |
| Embodiment 10 | Ethyl propionate | 45% | Formula (I-1) | 1.0% | 0.02 | 16.5% | 0.37 | 2.0% | 78.7% | 19.9% |
| Embodiment 11 | Ethyl propionate | 45% | Formula (I-1) | 1.5% | 0.03 | 16% | 0.36 | 4.1% | 78.9% | 17.1% |
| Embodiment 12 | Ethyl propionate | 45% | Formula (I-1) | 2.0% | 0.04 | 15.5% | 0.34 | 5.0% | 79.2% | 15.3% |
| Embodiment 13 | Ethyl propionate | 45% | Formula (I-1) | 2.5% | 0.06 | 15% | 0.33 | 6.2% | 79.3% | 13.3% |
| Embodiment 14 | Ethyl propionate | 45% | Formula (I-1) | 3.0% | 0.07 | 14.5% | 0.32 | 6.5% | 79.6% | 11.8% |
| Embodiment 15 | Ethyl propionate | 45% | Formula (I-1) | 3.5% | 0.08 | 14% | 0.31 | 7.1% | 79.8% | 10.4% |
| Embodiment 16 | Ethyl propionate | 45% | Formula (I-1) | 4.0% | 0.09 | 13.5% | 0.3 | 7.4% | 80.1% | 10.1% |
| Embodiment 17 | Ethyl propionate | 45% | Formula (I-1) | 4.5% | 0.10 | 13% | 0.29 | 7.9% | 80.2% | 9.9% |
| Embodiment 18 | Ethyl propionate | 45% | Formula (I-1) | 5.0% | 0.11 | 12.5% | 0.28 | 8.5% | 80.2% | 9.5% |
| Embodiment 19 | Ethyl propionate | 5% | Formula (I-1) | 2.0% | 0.40 | 55.5% | 11.1 | 10.3% | 77.5% | 11.2% |
| Embodiment 20 | Ethyl propionate | 30% | Formula (I-2) | 0.5% | 0.02 | 32% | 1.07 | 4.6% | 79.5% | 19.7% |
| Embodiment 21 | Ethyl propionate | 30% | Formula (I-3) | 0.5% | 0.02 | 32% | 1.07 | 4.5% | 79.8% | 19.5% |
| Embodiment 22 | Propyl propionate | 30% | Formula (I-5) | 0.5% | 0.02 | 32% | 1.07 | 5.2% | 80.0% | 18.7% |
| Embodiment 23 | Propyl propionate | 30% | Formula (I-8) | 0.5% | 0.02 | 32% | 1.07 | 5.0% | 78.6% | 17.1% |
| Embodiment 24 | Propyl propionate | 30% | Formula (I-11) | 0.5% | 0.02 | 32% | 1.07 | 5.3% | 78.5% | 18.3% |
| Comparative Embodiment 1 | / | / | Formula (I-1) | 1.0% | / | 61.5% | / | 15.0% | 73.5% | 8.0% |
| Comparative Embodiment 2 | Ethyl propionate | 60% | Formula (I-1) | 1.0% | 0.02 | 1.5% | 0.025 | 1.0% | 72.0% | 36.0% |
| Comparative Embodiment 3 | Ethyl propionate | 45% | Maleic anhydride | 1.0% | / | 16.5% | 0.37 | 7.0% | 70.1% | 23.3% |

It can be seen from Table 1 that, in Comparative embodiment 1, only the compound of Formula (I) is added, and impedance of a film layer formed by the compound of Formula (I) on a surface of a negative active material is relatively high, which is prone to cause plating of lithium ions on the surface of the negative active material and reduce a fast charging capability of a lithium-ion battery. Although the carboxylate ester compound and the unsaturated anhydride compound are added in Comparative embodiment 3, there is no bridging ring structure in a molecular structure of maleic anhydride, film-forming impedance is large, and a case in which by-products during cycling are densely accumulated on a surface of an active material cannot be effectively inhibited. Consequently, a fast charging capability and cycling stability of a lithium-ion battery are relatively low. By contrast, in embodiments of this application, the carboxylate ester compound and the compound of Formula (I) are added to the electrolyte, and the mass percentage A% of the carboxylate ester compound is controlled to a range from 5% to 45%. An unsaturated double bond in the compound of Formula (I) can be preferentially polymerized on surfaces of positive and negative electrodes to form a film. Moreover, due to a steric hindrance of a bridge ring structure, relatively small film-forming impedance can be obtained, and a case in which by-products during cycling are densely accumulated on a surface of an active material can be inhibited, to promote transport of lithium ions between the active material and the carboxylate ester compound. In addition, due to low polarity, the carboxylate ester compound can reduce a dissociation degree of a lithium salt, so that a solvation structure contains a higher amount of anion, and more anions participate in a film-forming reaction, thereby reducing interfacial impedance between a negative active material and the electrolyte, and low solvation energy of the carboxylate ester compound can further reduce the interfacial impedance. Therefore, the compound of Formula (I) and the carboxylate ester compound have a synergistic effect, so that the lithium-ion battery has a good fast charging capability, good cycling stability, and good high-temperature storage performance.

Further, by comparing Embodiments 1 to 18 and Embodiment 19, it can be seen that, when the mass percentage of the carboxylate ester compound and the mass percentage of the compound of Formula (I) satisfy 0.01 ≤ B / A ≤ 0.11, this is more conducive for the two compounds to have a synergistic effect, so that the lithium-ion battery has a further improved fast charging capability and further improved cycling stability. In addition, by comparing Embodiments 1 to 18, it can be seen that, when a mass percentage of ethylene carbonate and the mass percentage of the carboxylate ester compound satisfy 0.25 ≤ C / A ≤ 5.2, the fast charging capability and the cycling stability of the electrochemical device can be further improved.

**Table 2**

| Item | Electrolyte | | | | Battery performance | | |
|---|---|---|---|---|---|---|---|
| | Compound containing sulfur-oxygen double bond | | Polynitrile compound | | Fully charged storage at 85°C for 4h | Cycling for 800 cycles at 45°C | Low temperature discharge |
| | Type | Mass percentage | Type | Mass percentage | Swelling rate | Capacity retention rate | Capacity retention rate |
| Embodiment 10 | / | / | / | / | 19.9% | 78.7% | 70.0% |
| Embodiment 25 | 1,3-propane sultone | 1.0% | / | / | 19.1% | 80.2% | 69.2% |
| Embodiment 26 | 1,3-propane sultone | 2.0% | / | / | 18.5% | 82.1% | 68.8% |
| Embodiment 27 | 1,3-propane sultone | 4.0% | / | / | 17.9% | 81.5% | 68.0% |
| Embodiment 28 | 1,3-propane sultone | 6.0% | / | / | 17.1% | 80.8% | 67.1% |
| Embodiment 29 | Ethylene sulfate | 2.0% | / | / | 18.2% | 82.6% | 68.5% |
| Embodiment 30 | Prop-1-ene-1,3-sultone | 2.0% | / | / | 18.0% | 83.2% | 68.2% |
| Embodiment 31 | 1,3-propane sultone | 2.0% | Adipic dinitrile | 0.5% | 18.0% | 83.9% | 68.2% |
| Embodiment 32 | 1,3-propane sultone | 2.0% | Adipic dinitrile | 1.0% | 17.3% | 84.3% | 67.0% |
| Embodiment 33 | 1,3-propane sultone | 2.0% | Adipic dinitrile | 2.0% | 14.9% | 85.0% | 66.1% |
| Embodiment 34 | 1,3-propane sultone | 2.0% | Adipic dinitrile | 4.0% | 13.2% | 86.0% | 65.0% |
| Embodiment 35 | 1,3-propane sultone | 2.0% | Adipic dinitrile | 6.0% | 12.0% | 86.5% | 63.8% |
| Embodiment 36 | 1,3-propane sultone | 2.0% | Adipic dinitrile | 8.0% | 11.5% | 84.7% | 63.0% |
| Embodiment 37 | 1,3-propane sultone | 2.0% | Adipic dinitrile | 12.0% | 13.4% | 79.0% | 59.0% |
| Embodiment 38 | 1,3-propane sultone | 2.0% | Ethylene glycol bis(propionitrile) ether | 4.0% | 12.5% | 86.7% | 65.3% |
| Embodiment 39 | 1,3-propane sultone | 2.0% | 1,3,6-hexanetricarbonitrile | 4.0% | 11.3% | 87.4% | 64.8% |

It can be seen from Table 2 that, cycling performance and high-temperature storage performance of a lithium-ion battery can be further improved by further adding the compound containing sulfur-oxygen double bond to the electrolyte, and by controlling the mass percentage of the compound containing sulfur-oxygen double bond to a range from 0.01% to 6%, so that impedance of a CEI film can be ensured to be relatively small, and kinetic performance of the lithium-ion battery can be ensured. In addition, by further adding the polynitrile compound to the electrolyte, the polynitrile compound can be complex with transition metal on a surface of a positive active material, can effectively inhibit dissolution of the transition metal on the surface of the positive active material, reduce oxidation on the carboxylate ester compound, and improve the high-temperature storage performance of the lithium-ion battery. In addition, by controlling the mass percentage of the polynitrile compound to a range from 0.1% to 8%, influence of the polynitrile compound on a negative active material can be reduced, and the cycling stability and low-temperature performance of the lithium-ion battery can be ensured.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrolyte, comprising a carboxylate ester compound and a compound of Formula (I), wherein 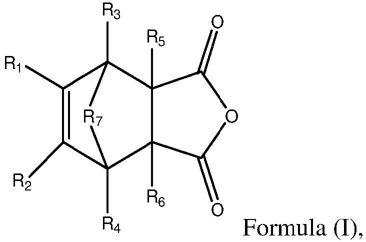 wherein
in Formula (I), R₁ to R₆ are independently selected from hydrogen atom, halogen atom, substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, substituted or unsubstituted C₁ to C₁₀ alkoxy, substituted or unsubstituted C₂ to C₁₀ alkoxyalkyl, substituted or unsubstituted C₆ to C₁₀ aryl, substituted or unsubstituted C₆ to C₁₀ aryloxy, substituted or unsubstituted C₁ to C₁₀ aldehyde group, substituted or unsubstituted C₂ to C₁₀ acyl, substituted or unsubstituted C₂ to C₁₀ carboxylate group, substituted or unsubstituted C₂ to C₁₀ carbonate group, cyanide, amino, hydroxyl, substituted or unsubstituted C₁ to C₁₀ nitrogen-containing group, substituted or unsubstituted C₁ to C₁₀ sulfur-containing group, a substituted or unsubstituted C₁ to C₁₀ boron-containing group, substituted or unsubstituted C₁ to C₁₀ silicon-containing group, or a substituted or unsubstituted C₁ to C₁₀ phosphorus-containing group; and
R₇ is selected from substituted or unsubstituted C₁ to C₁₀ alkylene, substituted or unsubstituted C₃ to C₁₀ cycloalkylene, substituted or unsubstituted C₁ to C₁₀ alkenylene, substituted or unsubstituted C₁ to C₁₀ oxygen-containing group, or substituted or unsubstituted C₁ to C₁₀ nitrogen-containing group, wherein
when substituted, a substituent comprises at least one of a halogen atom or cyanide; and
based on a mass of the electrolyte, a mass percentage of the carboxylate ester compound is A% satisfying 5 ≤ A ≤ 45.

2. The electrolyte according to claim 1, wherein the electrolyte satisfies at least one of the following conditions:
(1) the carboxylate ester compound comprises carboxylate ester with a total quantity of 2 to 10 C atoms in a molecule;
(2) the carboxylate ester compound comprises at least one of ethyl formate, propyl formate, butyl formate, isobutyl formate, methyl acetate, ethyl acetate, propyl acetate, methyl propionate, ethyl propionate, or propyl propionate; or
(3) 10 ≤ A ≤ 45.

3. The electrolyte according to claim 1, wherein the compound of Formula (I) comprises at least one of a compound of Formula (I-1) to a compound of Formula (I-15):

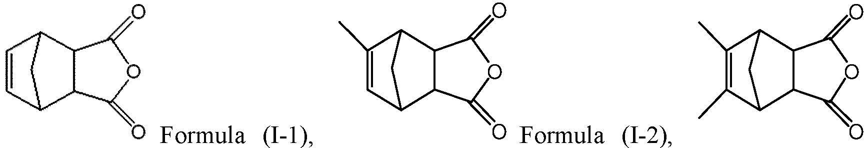

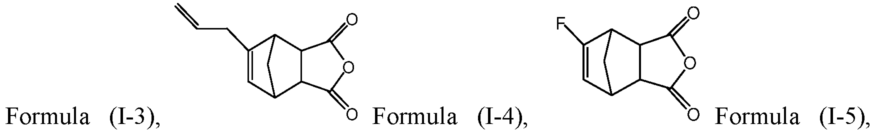

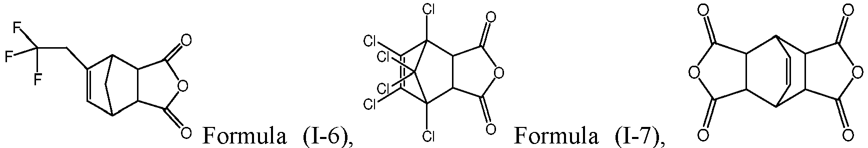

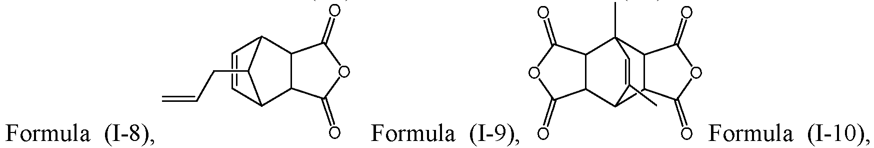

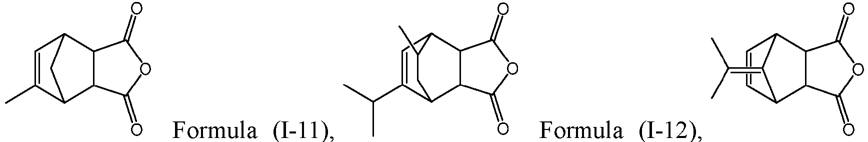

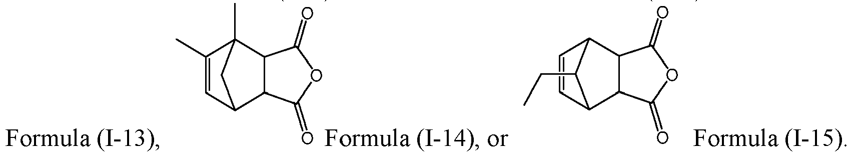

4. The electrolyte according to claim 1, wherein based on the mass of the electrolyte, a mass percentage of the compound of Formula (I) is B% satisfying 0.01 ≤ B ≤ 5.00.

5. The electrolyte according to claim 4, wherein 0.01 ≤ B / A ≤ 0.4.

6. The electrolyte according to claim 5, wherein 0.01 ≤ B / A ≤ 0.11.

7. The electrolyte according to claim 1, wherein the electrolyte further comprises ethylene carbonate, and based on the mass of the electrolyte, a mass percentage of the ethylene carbonate is C% satisfying 0.25 ≤ C / A ≤ 11.5.

8. The electrolyte according to claim 1, wherein the electrolyte further comprises a compound containing sulfur-oxygen double bond, and the electrolyte satisfies at least one of the following conditions:
(1) based on the mass of the electrolyte, a mass percentage of the compound containing sulfur-oxygen double bond is D% satisfying 0.01 ≤ D ≤ 6; or
(2) the compound containing sulfur-oxygen double bond comprises at least one of 1,3-propane sultone, ethylenesulfate, propene sultone, 3-fluoro-1,3-propane sultone, 1,2-propane sultone, 1,4-butane sultone, 1,2-butane sultone, 1,3-butane sultone, 2,4-butane sultone, or 1,3-pentane sulfonate.

9. The electrolyte according to claim 1, wherein the electrolyte further comprises a polynitrile compound, and the electrolyte satisfies at least one of the following conditions:
(1) based on the mass of the electrolyte, a mass percentage of the polynitrile compound is E% satisfying 0.1 ≤ E ≤ 8; or
(2) the polynitrile compound comprises at least one of succinonitrile, glutaronitrile, adiponitrile, ethylene glycol bis(propionitrile) ether, or 1,3,6-hexanetricarbonitrile.

10. An electrochemical device, comprising the electrolyte according to any one of claims 1 to 9.

11. An electronic device, comprising the electrochemical device according to claim 10.
